# EUROPEAN PATENT APPLICATION

(11) **EP 4 102 086 A1**
(43) Date of publication of application: **14.12.2022**
(21) Application number: 22177450.8
(22) Date of filing: 07.06.2022
(51) Int. Cl.: F16B 43/00

(54) **SELF-CENTERING SEALING INSERT**

(30) Priority: 11.06.2021 RU 2021117138
(71) Applicant: Company Domido Limited (CY), 1095 Nicosia (CY)
(72) Inventor: Savushkin, Roman Alexandrovich, Moscow (RU); Sokolov, Alexey Mikhailovich, Sankt-Peterburg (RU)
(74) Representative: Ferreccio, Rinaldo

(57) **Abstract**

The self-centering sealing insert has a central hole (1.1) running through its inner part. Its body is made in the form of two identical truncated cones (1.2, 1.3) combined with their large bases in the center of the body, which tapers to the edges where a central hole is formed; and the truncated cone is part of a right circular cone formed by rotating a rectangular trapezoid around its side with a height of H perpendicular to the bases of the trapezoid; while the radius of the larger base (R1.2) is greater than the radius of the smaller base (R1.1) so that the value of the angle P, which is formed by the plane between the two bases of the truncated cones and their tapering sides, is in the range from 1 to 89.9 degrees; while the radius of the larger base and the radius of the smaller base refers to the height of the lateral side of the rectangular trapezoid, so that the height H is less than or equal to the value of the difference between the radius of the larger base and the radius of the smaller base.

## Description

The invention relates to the field of construction, particularly to elements and parts of fasteners, and more specifically to an insert with a hole running through its center for a fastening connector to pass through.

The invention can be used in building structures.

A heat-insulating washer is known according to utility model patent No. 140100 of 27.04.2014, which has a removable cover and a central hole running through its inner part for a fastening connector to pass through; and the upper part of the washer has a cascade of external and internal recesses made coaxially with the central hole, the diameter of which is larger than the diameter of the central hole; and the inner recess is made with the possibility of deepening the head of a fastener with a smaller diameter than the outer recess, which is made with the possibility of hermetically fixing the cover; and the cross-section through the axis of symmetry of the washer has the form of a curved polygon, which has upper and lower straight sides parallel and opposite to each other, located on the side of the removable cover, and the lower side is larger than the upper and two side sides, each of which has a straight section connected to the lower side at right angles, and a curved section conjugated to the upper side.

An invention KR20090004347U from 08.10.2010 is known, which presents a centering washer that can be accurately and reliably fixed between structures, guiding the structure to be installed. The washer in the described invention has a central hole running through its inner part, and the inner circumference of the through hole and the guide, passing through to a given height, are formed at a predetermined height so as not to depart from the center while it is inserted into a hole. The washer guide is made of a cone tapering outward, so that the washer guide is easily inserted into a hole through the gap provided between the bolt and the hole, that is, the gap. When the bolt is gradually tightened, the guide is inserted according to a tolerance, that is, the gap already provided for between the hole and the bolt, with the outer edge of the cone abutting the entrance edge of the hole, where it is tightly fixed without gaps, that is, the centers of the holes and washers or bolts and nuts are fixed so that the structure is precisely held in the correct position. The centering washer in this invention is distinguished by the fact that the guide passes into the central through hole and protrudes into one side and the outer periphery narrows as it is inserted into the hole, so as not to depart from the center. The centering washer of the invention having the features described above increases accuracy by directing the center so that the structures, as well as fasteners such as bolts and nuts, are positioned in place when they are assembled during the projection of the guide, as the washer is inserted into the hole. In addition, the bolt and nut fastening operation can be easily performed, thereby improving holding power and significantly reducing work time. Disadvantages: it is not possible to seal the fastening point, the washer has no special support surface to increase its bearing area, it is not possible to position the newly installed element.

The technical problem is the creation of a self-centering sealing insert that can be accurately and reliably fixed between structural elements, directing, centering, and positioning the connected planes of the structure.

The technical solution lies in increasing the surface area for transmitting force, preventing the longitudinal displacement of the planes to be connected, as well as ensuring the installation of a fastening element that allows for the sequential connection of two or more fasteners.

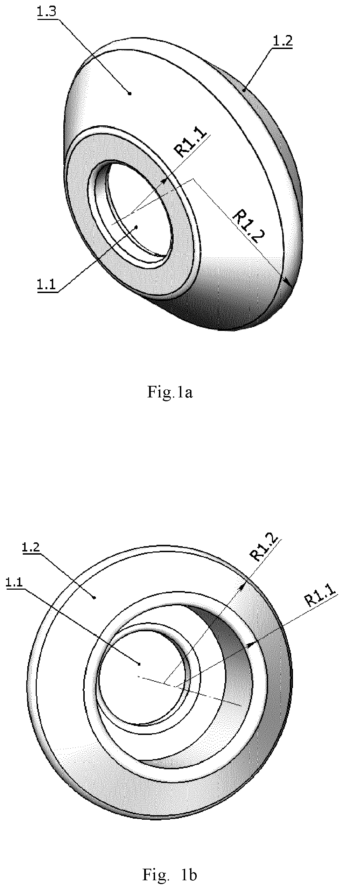

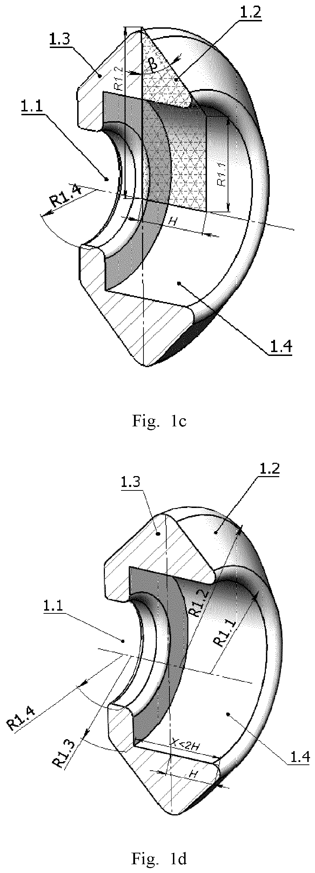

The technical problem is solved, and the technical result is achieved, by the fact that the self-centering sealing insert shown in Fig. 1a has a central hole (pos. 1.1) running through its body for the passage of a fastener. The body is made in the form of two identical truncated cones (pos.1.2 and pos.1.3) combined with their large bases in the center of the body, which tapers to the edges where the central hole is formed; and the truncated cone is part of a right circular cone formed by rotating a rectangular trapezoid around its side with a height of H (Fig. 1c) perpendicular to the bases of the trapezoid; while the radius of the larger base R1.2 is greater than the radius of the smaller base R1.1, so that the value of the angle β, which is formed by the plane between the two bases of the truncated cones and their tapering sides, is in the range from 1 to 89.9 degrees, preferably from 25 to 65, more preferably from 40 to 50, and most preferably at an angle of 45 degrees; while the radius of the larger base R1.2 and the radius of the smaller base R1.1 refers to the height of the lateral side of the rectangular trapezoid, so that the height H is less than or equal to the value of the difference between the radius of the larger base R1.2 and the radius of the smaller base R1.1.

A cylindrical recess is made along the central axis of the insert's inner part (pos.1.4 in Fig. Id), whose base is located on one of the smaller bases of the cones so that the axis of the cylindrical recess coincides with the central longitudinal axis of the cones, while the radius of the recess R1.3 is less than or equal to the value of the radius of the larger base of the truncated cones R1.2 (pos. 1.3 and 1.4), and the length of the cylindrical recess is less than the sum of the two heights (H) of the sides of the rectangular trapezoid (Fig. Id).

The shape of the cylindrical recess is selected from a group consisting of a circle, an oval, a square, a rectangle, a triangle, or their combinations.

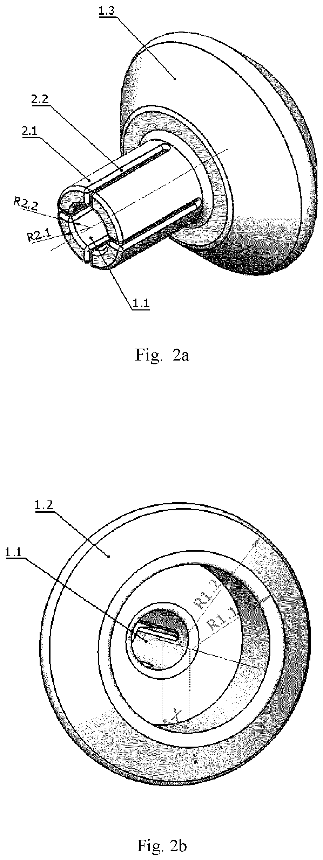

The self-centering sealing insert can be additionally provided with a protrusion (Fig. 2a) located along the axial line of the truncated cones combined with their large bases in the center of the insert's body, which is made in the form of a cylinder (pos. 2.1) with a radius of R2.1, whose base meets the smaller base of the truncated cone (pos. 1.3) opposite to the one through which the cylindrical recess is made; while the cylindrical protrusion has longitudinal slits (pos 2.2) whose number is in a range from 1 to 50, preferably from 2 to 20, more preferably from 3 to 10, and most preferably 4; while a channel with a radius of R2.2 passes through the entire cylindrical protrusion along its axis, and the radius R2.2 should be less than the radius of the cylindrical recess R1.3 of pos.1.4 in Fig. d.

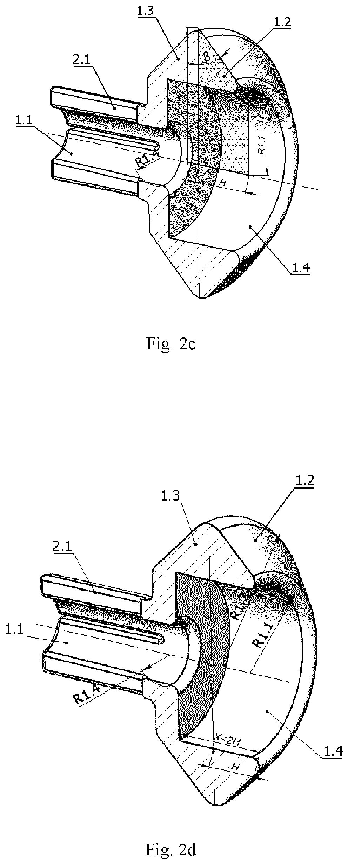

The self-centering sealing insert additionally contains a channel passing perpendicular through the smaller base of one of the truncated cones, with the axis of the channel aligned with the axis of the smaller base of one of the truncated cones perpendicular to the base, while the radius of the channel is less than the radius of the cylindrical recess. The cylindrical recess and the channel are designed so that at least one fastening element for interconnecting elements during assembly can be placed inside the self-centering sealing insert. (Fig. 2c).

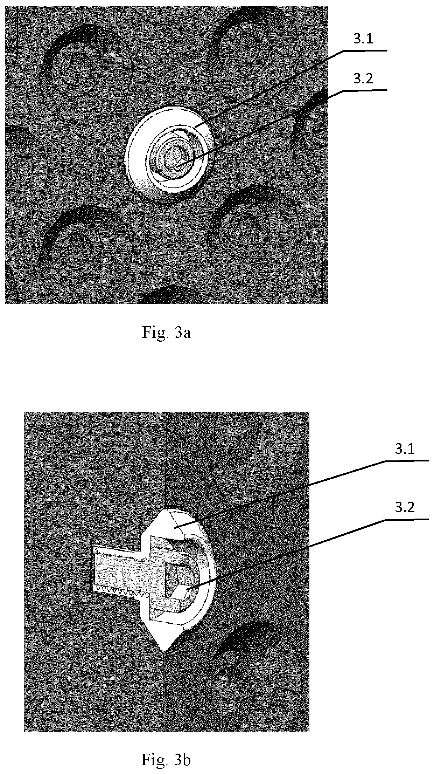

The self-centering sealing insert, in which a fastening element passes through a cylindrical recess and a channel in the preferred version, whose bearing surface interacts with the seat formed by a cylindrical recess in the structure and a smaller cone base with a channel, is made so that it can be fixed with a fastening element in such a way that, when it is placed into the seat of the counter hole, it takes up all the empty space in the gap, and the self-centering sealing insert is located in the center of the hole. (Fig. 3 b)

The shape of the channel is selected from a group consisting of a circle, an oval, a square, a rectangle, a triangle, or their combinations.

The self-centering sealing insert's angle of installation into the counter hole of the structure passes along a line at an angle to the XY plane in a range from 1 to 89 degrees, preferably from 20 to 70 degrees, more preferably from 40 to 50 degrees, and most preferably at an angle of 45 degrees.

The self-centering sealing insert, which is provided with a protrusion (pos. 2.1 in Fig. 2d) in the form of a cylinder with an internal channel, is divided into segments by longitudinal slits, and located on the smaller plane of the self-centering sealing insert opposite to the smaller plane on which the recess is located, while the channel in the cylinder narrows in such a way that the protrusion with slits expands when a fastening element is inserted into this element.

The shape of the protrusion with slits is selected from a group consisting of a circle, oval, square, rectangle, triangle, or their combinations.

The shape of the channel inside the protrusion with slits is selected from a group consisting of a circle, oval, square, rectangle, triangle, or their combinations.

The invention is explained by drawings showing the preferred method for manufacturing the device.

Fig. 1a is an angled view of a self-centering sealing insert with a through hole 1.1 in its center for the passage of a fastener.

The body of the self-centering sealing insert is made in the form of two identical truncated cones 1.2 and 1.3 combined with their large bases in the center of the body and tapering to the edges formed by the central hole 1.1.

The radius of the larger base R1.2 is greater than the radius of the smaller base R 1.1.

Figure 1b is an angled view of the self-centering sealing insert with a through hole in its center (pos 1.1) for the passage of a fastener. The radius of the larger base R1.2 is greater than the radius of the smaller base R 1.1.

Figure 1c is a cross-section view of the self-centering sealing insert that shows angle β, which is formed by the plane between the two bases of the truncated cones and their tapering sides, as well as height H, which is perpendicular to the bases of the trapezoid.

Figure Id is a cross-section view of the self-centering sealing insert that shows the cylindrical recess (pos. 1.4) along the body's central axis, whose base is located on one of the smaller bases of the cones, so that the axis of the cylindrical recess coincides with the central longitudinal axis of the cones, while the radius of recess R1.3 is less than or equal to the value of the radius of the larger base of the truncated cones R1.2 (pos. 1.2 and 1.3 in Fig. 1a).

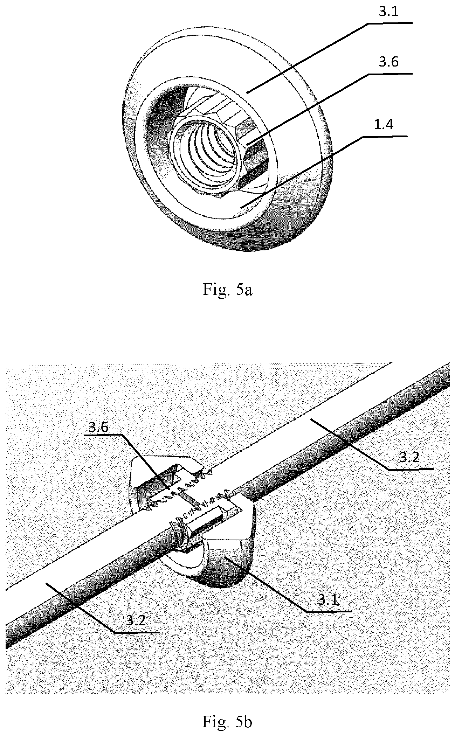

The presence of a recess makes it possible to install a fastening element (Fig. 5a, pos. 3.6) - a type of nut into which reinforcing fasteners (Fig. 5b, pos. 3.2) are screwed, thanks to which a sequential connection can be performed. The recess makes it possible to install the nut in such a way that this element does not increase the dimensions of the claimed invention. When performing its designated function, the ratio of radii is selected in such a way that the force from the nut with the reinforcing fastener screwed in passes evenly to the self-centering sealing insert and is distributed over the surface on which it rests.

Fig. 2a shows a protrusion made in the form of a cylinder with a radius R2.1 (pos. 2.1), whose base meets the smaller base of the truncated cone (pos. 1.3) opposite to the one through which the cylindrical recess is made (pos. 1.4), where the cylindrical protrusion has longitudinal slits (pos. 2.2) whose number is in the range from 1 to 50, while along the axis of the cylindrical protrusion (pos. 2.1) with slits (pos. 2.2) there is a channel (pos. 1.1) with a radius R2.2 passing through the entire cylindrical protrusion, and the radius R2. 2 must be less than the radius of the cylindrical recess R1.3 (pos. 1. 4 in Fig. Id).

The slits of pos 2.2 indicated in Fig. 2a are designed to divide the protrusion (pos. 2.1) into separate segments. The claimed invention with a cylindrical protrusion and slits is inserted into a hole on a surface. To fix it in the position in which it has been placed, a reinforcing fastening element, shown in Fig. 3a and 3b, pos. 3.2, is screwed into the invention, which performs its designated function by wedging the cylindrical protrusion with slits into the hole. The number of slits is selected depending on the type of fastener that is screwed into the designated invention and the amount of tensile force the fastener must withstand.

Figure 2b is an angular view of a self-centering sealing insert with a through hole in its center (pos. 1.1) for the passage of a fastening element. The radius of the larger base R1.2 is greater than the radius of the smaller base R 1.1.

Figure 2c is a cross-section view of the self-centering sealing insert that shows angle β, which is formed by the plane between the two bases of the truncated cones and their tapering sides, as well as height H, which is perpendicular to the bases of the trapezoid.

Fig. 2d is a cross-section view a self-centering sealing insert which shows that a cylindrical recess is made along the central axis of the body (pos. 1.4), whose base is located on one of the smaller bases of the cones, so that the axis of the cylindrical recess coincides with the central longitudinal axis of the cones, while the radius of the recess R1.3 is less than or equal to the value of the radius of the larger base of the truncated cones R1.2 (pos. 1.2 and 1.3 in Fig 2a); as well as a protrusion (Pos. 2.1 in Fig. 2d) in the form of a cylinder with an internal channel divided into segments by longitudinal slits, which is located on the smaller plane of the self-centering sealing insert opposite to the smaller plane on which the recess is located, while the channel in the cylinder narrows in such a way that the protrusion with slits expands when a fastening element is inserted into the self-centering sealing insert.

Figure 3a shows a variant for installing a self-centering sealing insert (pos.3.1), where a fastening element passes through the cylindrical recess and the channel (pos. 3.2), and the fastening element's bearing surface interacts with the seat formed by a cylindrical recess in the structure, while the self-centering sealing insert is installed in the structure and located in the center of the hole.

Figure 3b is a cross-section view of a self-centering sealing insert (pos.3.1), installed in a structure, where a fastening element (pos. 3.2) has passed through the cylindrical recess and the channel, and the fastening element's bearing surface interacts with the seat formed by the cylindrical recess in the structure.

Thanks to its conical shape, when tightened, the self-centering sealing insert takes up all the empty space in the gap and is located in the center of the hole.

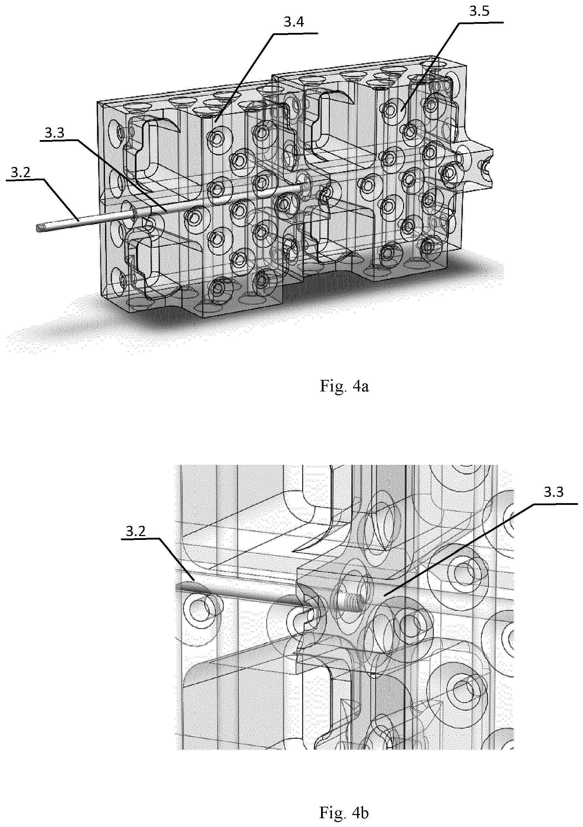

Figures 4a and 4b are images demonstrating the impossibility of assembling a structure when the elements of the structure are not positioned relative to one another. The image shows a situation in which there is no designated self-centering sealing insert, which is why the two parts (pos. 3.2 and pos. 3.3) do not have any elements that would lead to their centering relative to each other and prevent longitudinal displacement of the planes to be connected. If this condition is not met, it is not possible to install a fastener (pos.3.2) in the channel (pos.3.3), thus making sequential connection of two or more fasteners (pos.3.2) impossible.

Figure 5a shows the described invention with a nut (pos.3.6) installed in the cylindrical recess (pos. 1.4) of the self-centering sealing insert (pos. 3.1).

Fig. 5b shows a cross-section of the described invention when performing a serial connection in the most preferred variant, using a nut (pos.3.6) and fastening elements (pos. 3.2), where the recess in the self-centering sealing insert (pos. 3.1) is made in such a way that a nut (pos. 3.6) can be placed inside it for the reinforcing fasteners (3.2) to be screwed into.

Figure 6a shows the sequence for the preferred use of the invention with a building block as an example, where a cylindrical element (4.1) is embedded in the block (pos.4.2) for tightening the self-centering sealing insert.

Figure 6b shows the sequence for preferred use of the invention with a building block as an example, where the self-centering sealing insert (pos. 3.1) is placed into the mounting hole of the block.

Figure 6c shows the sequence for the preferred use of the invention with a building block as an example, where a fastener is screwed into the block through the channel of the self-centering sealing insert (pos. 3.1).

In Fig. 6d, the self-centering sealing insert (pos. 3.2) is fixed in place by a fastener.

In Fig. 6e, one block is being aligned with an adjacent block with the help of mounted self-centering sealing inserts.

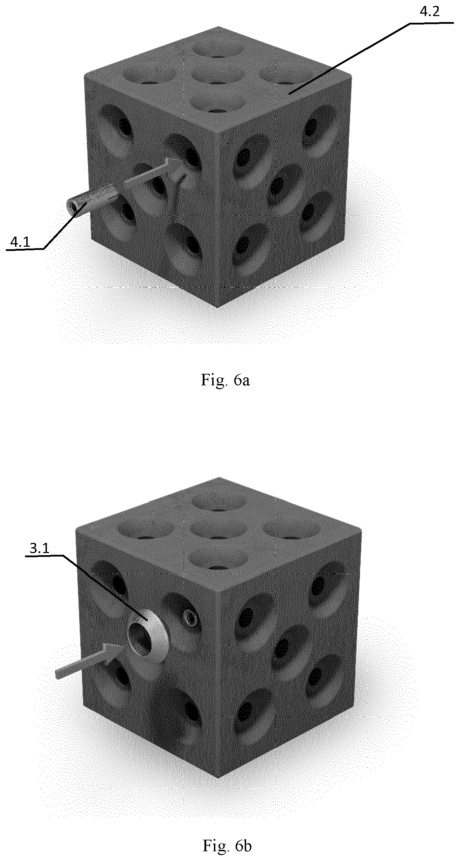

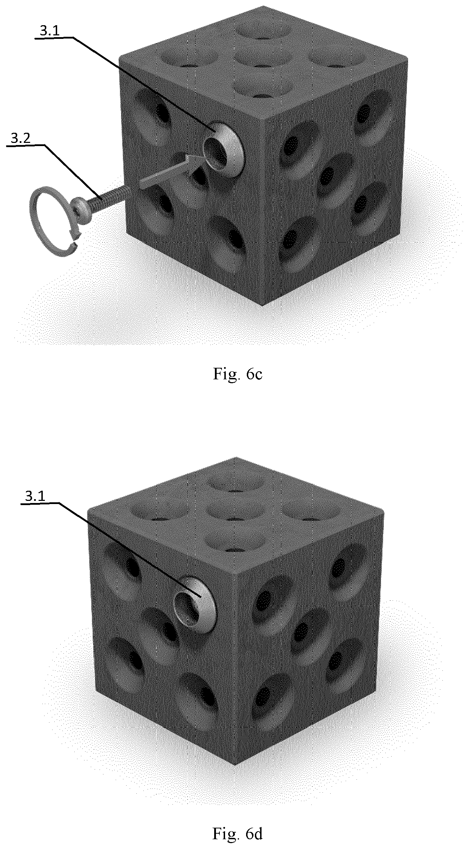

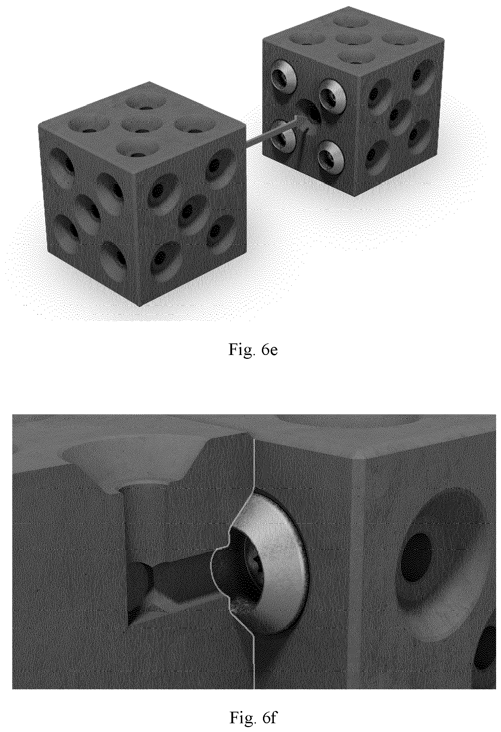

Figure 6f is a cross-section view of the point of contact between a block with mounted self-centering sealing inserts and an adjacent block. The contact zone is highlighted by a green line. This image shows a cross section of the surface with which the installed self-centering sealing insert is in contact. To increase the area of contact, the claimed self-centering sealing insert is made in the form of a cone, so that its bearing area is 1.4 times larger than it would be if it were made flat. The image also shows that the self-centering sealing insert's cylindrical shape properly positions the blocks relative to each other, and also prevents longitudinal displacement between them.

## Claims

1. The self-centering sealing insert with a central hole running through its body for the passage of a fastener is unique in that its body is made in the form of two identical truncated cones combined with their large bases in the center of the body, which tapers to the edges where a central hole is formed; and the truncated cone is part of a right circular cone formed by rotating a rectangular trapezoid around its side with a height of H (Fig. 1c) perpendicular to the bases of the trapezoid; while the radius of the larger base R1.2 is greater than the radius of the smaller base R1.1, so that the value of the angle β, which is formed by the plane between the two bases of the truncated cones and their tapering sides, is in the range from 1 to 89.9 degrees; while the radius of the larger base R1.2 and the radius of the smaller base R1.1 refers to the height of the lateral side of the rectangular trapezoid so that the height H is less than or equal to the value of the difference between the radius of the larger base R1.2 and the radius of the smaller base R1.1; while a cylindrical recess is made along the central axis of the insert's inner part, whose base is located on one of the smaller bases of the cones so that the axis of the cylindrical recess coincides with the central longitudinal axis of the cones, and the radius of the recess R1.3 is less than or equal to the value of the radius of the larger base of the truncated cones R1.2, and the length of the cylindrical recess is less than the sum of the two heights H of the sides of the rectangular trapezoid.

2. The self-centering sealing insert of claim 1, which is additionally provided with a protrusion located along the axial line of the truncated cones combined with their large bases in the center of the insert's body, which is made in the form of a cylinder with a radius of R2.1, whose base meets the smaller base of the truncated cone opposite to the one through which the cylindrical recess is made; while the cylindrical protrusion has longitudinal slits, whose number is in a range from 1 to 50, and a channel passes through the entire cylindrical protrusion along its axis, whose radius should be less than the radius of the cylindrical recess.

3. The self-centering sealing insert of claim 1, whose channel has a shape selected from a group consisting of a circle, an oval, a square, a rectangle, a triangle, or their combinations.

4. The self-centering sealing insert of claim 1, which additionally contains a channel passing perpendicular through the smaller base of one of the truncated cones, with the axis of the channel aligned with the axis of the smaller base of one of the truncated cones perpendicular to the base, while the radius of the channel is less than the radius of the cylindrical recess, and the cylindrical recess and the channel are designed so that at least one fastening element for interconnecting elements during assembly can be placed inside the self-centering sealing insert.

5. The self-centering sealing insert of claims 1 and 4 is unique in that a fastening element passes through a cylindrical recess and a channel in the preferred version, whose bearing surface interacts with the seat formed by a cylindrical recess in the structure and a smaller cone base with a channel, while the self-centering sealing insert is made so that it can be fixed with a fastening element in such a way that, when it is placed into the seat of the counter hole, it takes up all the empty space in the gap, and the self-centering sealing insert is located in the center of the hole.

6. The self-centering sealing insert of claim 5, whose channel has a shape selected from a group consisting of a circle, an oval, a square, a rectangle, a triangle, or their combinations.

7. The self-centering sealing insert of claim 1, in which the angle of installation into the counter hole of the structure passes along a line at an angle to the XY plane in a range from 1 to 89 degrees.

8. The self-centering sealing insert of claim 1, which is provided with a protrusion in the form of a cylinder with an internal channel is divided into segments by longitudinal slits, and located on the smaller plane of the self-centering sealing insert opposite to the smaller plane on which the recess is located, while the channel in the cylinder narrows in such a way that the protrusion with slits expands when a fastening element is inserted into this element.

9. The self-centering sealing insert of claim 8, whose protrusion with slits has a shape selected from a group consisting of a circle, oval, square, rectangle, triangle, or their combinations

10. The self-centering sealing insert of claim 8, whose channel inside the protrusion with slits has a shape selected from a group consisting of a circle, oval, square, rectangle, triangle, or their combinations.
